# EUROPÄISCHE PATENTANMELDUNG

(11) **EP 3 106 730 A1**
(43) Veröffentlichungstag der Anmeldung: **21.12.2016**
(21) Anmeldenummer: 16162250.1
(22) Anmeldetag: 24.03.2016
(51) Int. Cl.: F16L 21/03

(54) **ROHR ODER ROHRFORMTEIL**

(30) Priorität: 18.06.2015 DE 202015103221 U
(71) Anmelder: REHAU AG + Co, 95111 Rehau (DE)
(72) Erfinder: Sieber, Jürgen, 91074 Herzogenaurach (DE); Hendel, Roland, 91086 Aurachtal (DE)

(57) **Zusammenfassung**

Die vorliegende Erfindung betrifft ein Rohr oder Rohrformteil (1) mit einem an einem Endabschnitt (1.1) angeordneten Verbindungsmittel (2), das ein- oder mehrteilig ausgebildet ist, und das ein Lumen (2.1) aufweist, zur fluiddichten Verbindung des Rohres oder Rohrformteils (1) mit einem Ende (5.2) eines Bauelements (5), das sich dadurch auszeichnet, dass am Verbindungsmittel (2) wenigstens ein Abstreifelement (3) ausgebildet ist, das derartig in Richtung des Lumens (2.1) von einem Abschnitt (2.2) des Verbindungsmittels (2) hervorsteht, dass es beim Einführen des Endes (5.2) des Bauelements (5) in das Verbindungsmittel (2) des Rohres oder Rohrformteils (1) zur Herstellung der fluiddichten Verbindung die Außenoberfläche (5.1) des Bauelements (5) zumindest abschnittsweise kontaktiert.

## Beschreibung

Die Erfindung betrifft ein Rohr oder Rohrformteil. Weiterhin betrifft die Erfindung ein Rohrsystem mit einem solchen Rohr oder Rohrformteil.

Rohre oder Rohrformteile sind zum Aufbau eines Rohrnetzes oder Rohrsystems häufig miteinander oder mit anderen Bauelementen zu verbinden. Hierbei kommt es darauf an, dass eine fluiddichte Verbindung hergestellt wird, die dafür sorgt, dass das in den Rohrnetzen oder Rohrsysteme aufgenommene Fluid an den Verbindungsstellen nicht nach außen, beispielsweise in das Erdreich, gelangt, oder aber, dass Fluide beispielsweise aus dem Erdreich nicht in das Rohrnetz oder Rohrsystem eindringen.
Bei der Herstellung der Verbindung ist daher auf besondere Sauberkeit zu achten.

Unter Baustellenbedingungen, bei denen regelmäßig derartige Verbindungen hergestellt werden, kommt es häufig vor, dass die Außenoberfläche der Bauelemente verschmutzt ist. Dies liegt zum einen an der Freilagerung der Bauelemente an der Baustelle, zum anderen an den dort getätigten Arbeiten, wie beispielsweise anfallender Aushub aus Baugruben, sowie der Einwirkung von Wind und Wetter. Regelmäßig sind daher die Außenoberflächen von Bauelementen mit anhaftendem Schmutz, wie beispielsweise Schlamm, Sand, Erde und Steinchen belegt.

Beim Verbinden von Rohren oder Rohrformteilen mit solchen Bauelementen kann dieser anhaftende Schmutz die Dichtwirkung der an der Verbindungsstelle vorgesehenen Dichtung beeinträchtigen oder sogar verhindern.
Weiterhin kann es zu Beschädigungen der Dichtung beim Einführen der Bauelemente in das Rohr oder Rohrformteil kommen, wenn beispielsweise spitze Steine mit den relativ weichen Dichtungen beim Einsteckvorgang in Kontakt kommen.

Die Bauelemente sind daher aufwendig zu reinigen, was aber nicht immer mit der gebotenen Sorgfalt ausgeführt wird.

Aus dem Stand der Technik sind zur Abhilfe bei diesem Problem Lippendichtungen mit mehreren Lippen vorgesehen, bei denen zumindest eine Lippe verhindern soll, dass diese Verunreinigungen von der weiter innen liegenden eigentlich dichtenden Lippe ferngehalten werden.
Dies gelingt nicht immer, so dass nach weiterer Abhilfe zu diesem Problem gesucht wird.

Die Aufgabe der vorliegenden Erfindung ist es daher, ein Rohr oder Rohrformteil bereitzustellen, das eine gegenüber dem Stand der Technik verbesserte Fähigkeit aufweist, Schmutz von der Oberfläche des Bauelements, das mit dem Rohr oder Rohrformteil verbunden werden soll, zu entfernen.

Eine weitere Aufgabe der vorliegenden Erfindung ist es, ein Rohrsystem anzugeben, welches ein solches Rohr oder Rohrformteil beinhaltet.

Die Lösung der vorliegenden Aufgabe erfolgt gemäß Anspruch 1.

Es wurde im Rahmen der vorliegenden Erfindung erkannt, dass ein Rohr oder Rohrformteil das oben geschilderte Problem löst, wenn vorgesehen ist, dass dieses ein an einem Endabschnitt angeordnetes Verbindungsmittel aufweist, das ein oder mehrteilig ausgebildet ist, und das ein Lumen aufweist, wobei das Verbindungsmittel zur fluiddichten Verbindung des Rohres oder Rohrformteils mit einem Ende eines Bauelements vorgesehen ist.

Erfindungsgemäß zeichnet sich das Rohr oder Rohrformteil dadurch aus, dass am Verbindungsmittel wenigstens ein Abstreifelement ausgebildet ist, das derartig in Richtung des Lumens des Rohres oder Rohrformteils von einem Abschnitt des Verbindungsmittels hervorsteht, dass es beim Einführen des Endes des Bauelements in das Verbindungsmittel des Rohres oder Rohrformteils zur Herstellung der fluiddichten Verbindung die Außenoberfläche des Bauelements zumindest abschnittsweise kontaktiert.

Durch das Vorsehen, dass am Verbindungsmittel ein Abstreifelement ausgebildet ist, welches in Richtung des Lumens des Rohres oder Rohrformteils von einem Abschnitt des Verbindungsmittels in der oben geschilderten Weise hervorsteht, ist sichergestellt, dass beim Einführen eines Bauelements in das Verbindungsmittel auf dessen Außenoberfläche anhaftender Schmutz abgestreift wird.

Das Abstreifelement gemäß vorliegender Erfindung kann so bemessen sein, dass es die Außenoberfläche des Bauelements beim Einführen des Endes des Bauelements in das Verbindungsmittel des Rohres oder Rohrformteils zur Herstellung der fluiddichten Verbindung zumindest abschnittsweise kontaktiert oder dass es die Außenoberfläche des Bauelements entlang dessen Umfang an jeder Stelle kontaktiert.

Durch das zumindest abschnittsweise Kontaktieren der Außenoberfläche des Bauelements durch das Abstreifelement gemäß vorliegender Erfindung wird sichergestellt, dass Abschnitte der Außenoberfläche des Bauelements, die nicht kontaktiert werden, den Abstreifelementen zumindest sehr nahe kommen. Hierdurch wird auch dort anhaftender Schmutz zwar nicht direkt an der Außenoberfläche, doch in geringer Entfernung von dieser abgestreift. Je nach Ausführung und Bemessung des Abstreifelements kann diese Entfernung wenige hundertstel bis wenige zehntel Millimeter betragen. Auch bei dieser geringen Entfernung kann Schmutz weitgehend von Außenoberfläche des Bauelements entfernt werden.

Von besonderem Vorteil ist das erfindungsgemäße Rohr oder Rohrformteil auch durch den Umstand, dass die fluiddichte Verbindung mit einem Bauelement auch wieder leicht trennbar ist, indem das Bauelement aus dem Verbindungsmittel herausgezogen wird. Das Abstreifelement setzt dem Herausziehen des Bauelements aus dem Verbindungsmittel des Rohres oder Rohrformteils keinen nennenswerten Widerstand entgegen. Es wird dabei auch nicht beschädigt, so dass es erneut genutzt werden kann, wenn wieder ein Bauelement in das Verbindungsmittel zur Herstellung der fluiddichten Verbindung eingeschoben wird.

In einer besonders bevorzugten Ausführungsform der vorliegenden Erfindung ist das Abstreifelement an der Stirnflanke des Verbindungsmittels angeordnet.
Durch diese Maßnahme wird der von der Außenoberfläche des Bauelements abzustreifende Schmutz bereits an der Öffnung des Verbindungsmittels entfernt, so dass dieser Schmutz nicht in den Bereich des Dichtungsmittels gelangt, der für die fluiddichte Verbindung zwischen dem Rohr oder Rohrformteil und dem Bauelement vorgesehen ist. Hierdurch wird in sicherer Weise vermieden, dass Schmutz bis zum Dichtungsmittel gelangt, und dessen Dichtfunktion reduziert oder aufhebt und auch weiter dafür sorgt, dass es zu keiner Beschädigung des Dichtungsmittels kommt.

Das Abstreifelement kann in einer bevorzugten Ausführung der vorliegenden Erfindung als ein einziges Abstreifelement ausgelegt sein. In einer alternativen Ausführung kann das Abstreifelement als eine Vielzahl von Abstreifelementen ausgebildet sein. Wenn das Abstreifelement als ein einziges Abstreifelement ausgebildet ist, so bietet sich an, dass dieses in Form einer entlang der gesamten Stirnflanke des Verbindungsmittels oder zumindest entlang eines Abschnitts der Stirnflanke des Verbindungsmittels ausgebildetes Abstreifelement vorgesehen ist.

Eine Vielzahl von Abstreifelementen kann ebenso entlang der gesamten Stirnflanke des Verbindungsmittels oder entlang zumindest eines Abschnitts der Stirnflanke des Verbindungsmittels ausgebildet sein.

Wenn eine Vielzahl von Abstreifelementen ausgebildet ist, so sind diese bevorzugt zungenförmig ausgeformt, wobei die Zungen dann von der Stirnflanke des Verbindungsmittels in Richtung des Lumens wegstehen.
In bevorzugter Weise sind dabei alle zungenförmigen Abstreifelemente gleichartig gestaltet und beabstandet zueinander angeordnet.
Als besonders günstig hat sich bei der vorliegenden Erfindung ergeben, wenn vorgesehen ist, dass die Spitzen der Zungen in Richtung des Lumens des Verbindungsmittels ausgerichtet ist, wobei die Basis der Zungen am Verbindungsmittel angeordnet sind.
Die Zungenspitze ist sind in bevorzugter Weise in ihrer Breite schmaler als die Zungenbasis ausgebildet. Die Dicke der Zungen ist von der Zungenbasis bis zur Zungenspitze gleichbleibend oder abnehmend ausgeführt. Als vorteilhaft hat sich herausgestellt, wenn vorgesehen ist, dass die Zungenspitze gegenüber der Zungenbasis auslenkbar ist. In diesem Fall wird ein besonders wirksames Abstreifen von Schmutz von der Außenoberfläche des Bauelements bewirkt.

Die Anordnung der Vielzahl von Abstreifelementen erfolgt bevorzugt in einer Ebene, wobei die Ebene in einer sehr günstigen Ausführung der Erfindung senkrecht zur Achse des Rohres oder Rohrformteils angeordnet ist.

Es ist in einer alternativen Ausführung auch möglich, eine Vielzahl von Abstreifelementen in zwei Ebenen anzuordnen, wobei die Ebenen in einer sehr günstigen Ausführung der Erfindung senkrecht zur Achse des Rohres oder Rohrformteils angeordnet sind und einen Abstand zueinander aufweisen.

Hierbei hat sich als besonders günstig erwiesen, wenn vorgesehen ist, dass die Zungen einer Ebene jeweils die zwischen den Zungen der anderen Ebene ausgebildeten Zwischenräume überdecken. Auf diese Weise wird ein ganz besonders wirksames Abstreifen von Anhaftungen von der Außenoberfläche des Bauelements bewirkt.

Es kann weiterhin vorgesehen sein, dass die Zungen der einen Ebene oder der beiden Ebenen schräg in Bezug auf eine radiale Achse des Rohres oder Rohrformteils, die die Zungenspitze und die Mitte der Zungenbasis durchstößt, ausgerichtet sind. Die Zungen sind dann vergleichbar einem Innengewindeabschnitt an einer Zylinderoberfläche angeordnet. Auf diese Weise kann eine besonders einfache Herstellung und Entformung eines solches Rohres oder Rohrformteils in einem Formgebungsprozess - beispielsweise einem Spritzgussprozess - erfolgen, indem das Rohr oder Rohrformteil durch einen Drehvorgang aus der Form analog zu einer Gewindedrehentformung entnehmber ist. Mit dieser Maßnahme kann eine sehr kostengünstige Form und damit auch ein sehr kostengünstiger Produktionsprozess realisiert werden.

Das Abstreifelement kann gemäß vorliegender Erfindung in einer sehr günstigen Ausführungsart einstückig mit dem Verbindungsmittel ausgebildet sein. Dies ist insofern vorteilhaft, als das Abstreifelement dann in einem einzigen Formprozess, beispielsweise in einem Spritzgussprozess zusammen mit dem Verbindungsmittel herstellbar ist.

In einer alternativen Ausführungsart der vorliegenden Erfindung ist vorgesehen, dass das Abstreifelement zweistückig mit dem Verbindungsmittel ausgebildet ist. In dieser Ausführungsart ist es möglich, das Abstreifelement gesondert vom Verbindungsmittel zu fertigen und diese dann beispielsweise baukastenartig nach den jeweiligen Notwendigkeiten in verschiedener Weise zu kombinieren. So kann beispielsweise das Verbindungsmittel aus hartem Polypropylen bestehen und das Abstreifelement aus einem dazu vergleichsweise weichen Elastomermaterial.

In einer weiteren sehr vorteilhaften Ausführung der Erfindung ist vorgesehen, dass wenigstens zwei Reihen von Abstreifelementen ausgebildet sind. Die wenigstens zwei Reihen von Abstreifelementen sind dabei bevorzugt in zwei Ebenen, die etwa senkrecht zur Achse des Endabschnitts des Rohres oder Rohrformteils ausgerichtet sind, angeordnet.

Durch das Vorsehen von zwei Reihen von Abstreifelementen wird die Sicherheit, dass der Schmutz der an der Außenoberfläche des Bauelements anhaftet, abgestreift wird, weiter erhöht.

Das Abstreifelement kann in einer bevorzugten Ausführungsart der vorliegenden Erfindung aus dem Polymermaterial des Verbindungsmittels bestehen bzw. ein solches enthalten. Damit wird der durchgängigen Materialauswahl und insbesondere auch dem Recyclinggedanken Rechnung getragen. Weiterhin lässt sich ein derartiges Rohr oder Rohrformteil einfacher herstellen, da letztlich nur auf eine Materialbasis zurückzugreifen ist. Insbesondere kann das Abstreifelement dadurch in einfacher Weise bei der Formung des Rohres bzw. Rohrformteils gleich einstückig oder zweistückig ausgebildet werden.

In einer anderen Ausführungsart ist vorgesehen, dass das Abstreifelement aus einem gegenüber dem Polymermaterial des Verbindungsmittels unterschiedlichen Polymermaterial besteht bzw. ein solches enthält.
Bei dieser Ausführungsart kann das Polymermaterial des Abstreifelements ganz gezielt nach den erforderlichen Eigenschaften, wie beispielsweise Härte, E-Modul und Inertheit gegen verschiedene Fluide oder andere Stoffe ausgewählt werden, so dass ein Abstreifelement resultiert, das an die Vorgaben des Kunden, an technische Normen oder an ganz spezielle Bedürfnisse anpassbar ist.

In einer besonderen Ausführungsart der vorliegenden Erfindung ist das Rohr oder Rohrformteil derartig gestaltet, dass es wenigstens zwei Verbindungsmittel aufweist, wie oben beschrieben.

Ein solches Rohr oder Rohrformteil kann beispielsweise ein Rohr, ein Rohrabschnitt, ein Rohrbogen, ein Rohrverbindungsstück, ein Reduzierstück, ein Y-Stück, ein T-Stück oder ein anderes Rohrformteil sein.

In bevorzugter Weise ist ein solches Rohr oder Rohrformteil als Doppelsteckmuffe oder als Überschiebmuffe ausgebildet.

Im Rahmen der vorliegenden Erfindung sind mit "Bauelementen" stets solche gemeint, die einen Endabschnitt aufweisen, der geeignet ist, in das Verbindungsmittel des Rohres oder Rohrformteils eingeführt zu werden. Das Ende des Bauelements ist dazu im Allgemeinen rohrförmig bzw. als Rohrabschnitt ausgebildet.
Weiterhin sind durch die vorliegende Erfindung auch Schächte als Bauelemente umfasst, soweit diese einen Anschluss im Sinne eines "Endes" aufweisen, das ebenso geeignet ist, in ein Verbindungsmittel eingeschoben zu werden.
Es kann in diesem Zusammenhang auch sein, dass am Schacht ein Endabschnitt eines Anschlusses ausgebildet ist, der ein Verbindungsmittel gemäß vorliegender Erfindung aufweist, insofern ist ein derartiger Schacht hier unter "Rohr oder Rohrformteil" zu subsummieren.

Die Aufgabe, ein Rohrsystem anzugeben, erfährt ihre Lösung in Anspruch 10.
Im Rahmen der Erfindung wurde erkannt, dass ein Rohrsystem dann die gestellte Aufgabe löst, wenn vorgesehen ist, dass ein Rohr oder Rohrformteil gemäß vorstehender Beschreibung vorgesehen ist. Durch ein solches erfindungsgemäßes Rohr oder Rohrformteil wird ein Rohrsystem in ganz besonderer Weise technisch aufgewertet. Daraus resultieren dann die vorstehend beschriebenen Vorteile.

Anwendung findet die Erfindung überall dort, wo aus Rohren bzw. Rohrformteilen und weiteren Bauelementen Rohrsysteme gebaut werden. Die Erfindung ist besonders hilfreich bei den unter Baustellenbedingungen unvermeidbar auftretenden Verschmutzungen der Außenoberflächen von Bauelementen mit anhaftendem Schlamm, Sand, Erde und Steinchen und ähnlichem.
Diese Verschmutzungen können durch die Maßnahme gemäß vorliegender Erfindung in sicherer Weise entfernt werden, so dass eine fluiddichte Verbindung von Rohren bzw. Rohrformteilen mit Bauelementen einfach herstellbar ist.
Es ergeben sich so Anwendung vorliegende Erfindung insbesondere im Bereich der drucklosen Leitungen zur Aufnahme, Leitung und Speicherung von Fluiden. Dies betrifft in erster Linie Systeme für die Abwasser- und solche für die Regenwasserbewirtschaftung. Aber auch in anderen Bereichen, wie beispielsweise der Schwimmbadtechnik, der Landwirtschaft, der Lebensmittel- und Getränkeindustrie, dem Maschinenbau und anderen Anwendungsfeldern kann die Erfindung vorteilhaft genutzt werden.

Bei der vorliegenden Erfindung wird davon ausgegangen, dass Rohre bzw. Rohrformteile und die zu verbindenden Bauelemente im Bereich der herzustellenden fluiddichten Verbindung einen Abschnitt mit kreisförmigen Querschnitt aufweisen. Wesentliche Teile der Figurenbeschreibung beziehen sich darauf.
Die Erfindung umfasst selbstverständlich auch Abschnitte mit Querschnitten bei Rohren bzw. Rohrformteilen und zu verbindenden Bauelementen, die von der Kreisform abweichen, also beispielsweise elliptisch, eiförmig, eckig, abgerundet eckig oder Mischformen der vorstehend Genannten darstellen.

Weitere wichtige Merkmale und Vorteile der Erfindung ergeben sich aus den Unteransprüchen, aus den Figuren und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Fig. dargestellt und werden in der nachfolgenden Beschreibung näher erläutert.

Hierzu zeigt
- Fig. 1: eine Querschnittsansicht eines Rohres oder Rohrformteils einer ersten Ausführungsform gemäß vorliegender Erfindung;
- Fig. 2: eine Querschnittsansicht eines Rohres oder Rohrformteils und ein mit diesem zu verbindendes Bauelement;
- Fig. 3: eine Querschnittsansicht eines Rohres oder Rohrformteils mit einem verbundenen Baulelement;
- Fig. 4: eine Querschnittsansicht eines Rohres oder Rohrformteils einer zweiten Ausführungsform mit einem verbundenen Bauelement;
- Fig. 5: eine seitliche perspektivische Ansicht einer Doppelsteckmuffe;
- Fig. 6: eine Querschnittsansicht einer Doppelsteckmuffe.

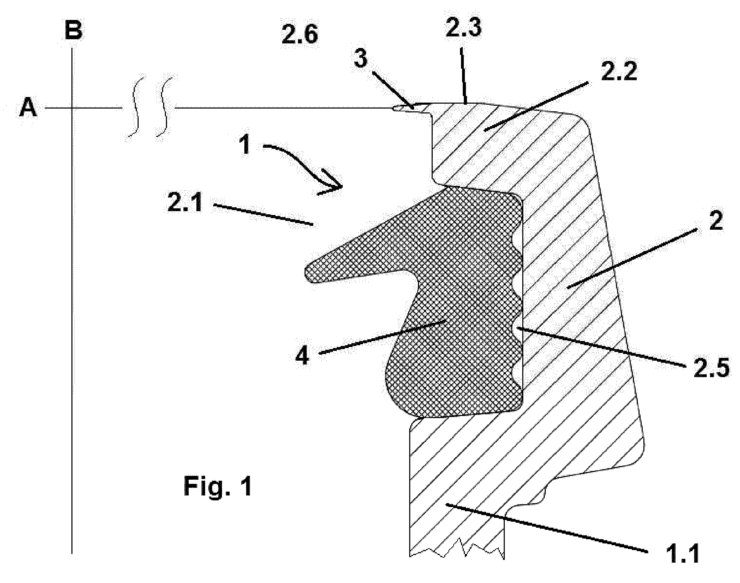

In Fig. 1 ist in einer Querschnittsansicht ein Rohr oder Rohrformteil einer ersten Ausführungsform gemäß vorliegender Erfindung gezeigt. Soweit im Folgenden stets von einem "Rohr" die Rede ist, ist damit stets das Rohr oder Rohrformteil 1 der vorliegenden Erfindung gemeint.

Das Rohr 1 weist einen Endabschnitt 1.1 auf, an dem ein Verbindungsmittel 2 angeordnet ist. Der Endabschnitt 1.1 und das Verbindungsmittel 2 sind dabei einstückig miteinander verbunden. Das Verbindungsmittel 2 ist so geformt, dass ein Dichtungsmittel 4, in Form einer beispielsweise Dichtung aus einem Elastomermaterial mit einer Lippe aufnehmbar ist. Hierzu ist am Verbindungsmittel 2 eine etwa U-förmige Ausnehmung vorgesehen, die mit ihrer Öffnung in Richtung des Lumens 2.1 des Verbindungsmittels 2 zeigt. Diese Ausnehmung ist als Nut 2.5 ausgeführt, in der das Dichtungsmittel 4 festgelegt ist.

Das Verbindungsmittel 2 weist einen Abschnitt 2.2 an der Endseite des Rohres 1 an der Öffnung 2.6 auf. An dem Abschnitt 2.2 ist eine Stirnflanke 2.3 ausgebildet, die das Ende des Rohres 1 bildet und die Öffnung 2.6 begrenzt. Von der Stirnflanke 2.3 steht ein Abstreifelement 3 hervor, das derart ausgerichtet ist, dass es zum Lumen 2.1 des Verbindungsmittels 2 hinweist.

Das Abstreifelement 3 ist in einer Ebene A, die etwa senkrecht zur Achse B des Endabschnitts 1.1 des Rohres 1 ausgerichtet ist, angeordnet.

Das Verbindungsmittel 2 ist dazu geeignet, dass in dieses ein Bauelement einschiebbar ist, wodurch es zu einer fluiddichten Verbindung des Rohres 1 und des Bauelements kommt.

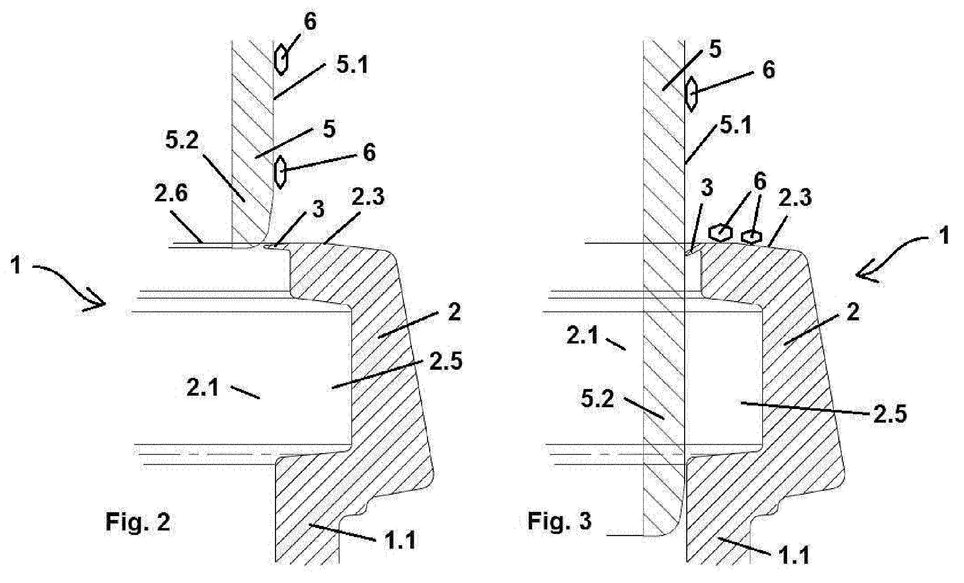

In Fig. 2 ist eine Querschnittsansicht eines Rohres oder Rohrformteils und ein mit diesem zu verbindendes Bauelement gezeigt.

Das Rohr 1 entspricht dem unter Fig. 1 beschriebenem Rohr 1. Der Übersichtlichkeit halber wurde das Dichtungsmittel 4 in Fig. 2 nicht eingezeichnet.

Unmittelbar am Ende des Rohres 1 ist vor dessen Öffnung 2.6 ein Bauelement 5 angeordnet, das mit dem Rohr 1 verbunden werden soll. Das Bauelement 5 kann beispielsweise als Rohr geformt sein.

Das Bauelement 5 weist in der vorliegenden Ausführung ein Ende 5.2 auf, das zur leichteren Einführung des Bauelements 5 in das Verbindungsmittel 2 des Rohres 1 leicht "angespitzt" ausgeführt ist. Die Kanten am Ende 5.2 des Bauelements 5 sind verrundet, so dass die Einführung des Endes 5.2 des Bauelements 5 weiter erleichtert wird.

Auf der Außenoberfläche 5.1 des Bauelements 5 ist anhaftender Schmutz 6 dargestellt.

Durch Bewegung des Bauelements 5 in Richtung des Rohres 1 kann das Ende 5.2 des Bauelements 5 in das Verbindungsmittel 2 des Rohres 1 eingeschoben werden.

In Fig. 3 ist in einer Querschnittsansicht ein Rohr oder Rohrformteil mit einem verbundenen Bauelement gezeigt.

Das Bauelement 5 ist dabei in das Verbindungsmittel 2 des Rohres 1 eingeführt.

Der Übersichtlichkeit halber wurde auch hier das Dichtungsmittel 4 in der Nut 2.5 des Verbindungsmittels 2 des Rohres 1 nicht dargestellt.

Beim Einführen des Bauelements 5 in das Verbindungsmittel 2 des Rohres 1 kontaktiert das Abstreifelement 3, das an der Stirnflanke 2.3 des Verbindungsmittels 2 angeordnet ist, die Außenoberfläche 5.1 des Bauelements 5 zumindest abschnittsweise.

Das Abstreifelement 3 ist derart bemessen, dass es so weit von der Stirnflanke 2.3 des Verbindungsmittels 2 in Richtung des Lumens 2.1 hervorsteht, dass es bei Inkontaktkommen mit der Außenoberfläche 5.1 des Bauelements 5 ein wenig ausgelenkt wird in Richtung der Einschubbewegung des Bauelements 5 in das Verbindungsmittel 2.

Bei diesem Kontaktieren des Abstreifelements 3 mit der Außenoberfläche 5.1 des Bauelements 5 wird an der Außenoberfläche 5.1 des Bauelements 5 anhaftender Schmutz 6 abgestreift. Dadurch erfolgt eine Säuberung der Außenoberfläche 5.1 des Bauelements 5, bevor die Außenoberfläche 5.1 des Bauelements 5 mit dem nicht gezeigten Dichtungsmittel 4 in der Nut 2.5 des Verbindungsmittels 2 des Rohres 1 in Berührung kommt.

Der von der Außenoberfläche 5.1 des Bauelements 5 mithilfe des Abstreifelements 3 abgestreifte Schmutz 6 kommt zumindest anteilig auf der Stirnflanke 2.3 des Verbindungsmittels 2 des Rohres 1 zu liegen.

Die Außenoberfläche 5.1 des Bauelements 5 ist auf diese Weise soweit gesäubert, dass die Dichtungsfunktion zur Herstellung der fluiddichten Verbindung zwischen dem Rohr 1 und dem Bauelement 5 gewährleistet ist.

In Fig. 3 ist weiterhin gezeigt, dass das Bauelement 5 soweit in das Verbindungsmittel 2 des Rohres 1 eingeführt ist, dass es mit seiner Außenoberfläche 5.1 zumindest abschnittsweise die Innenoberfläche am Endabschnitt 1.1 des Rohres 1 berührt und damit in der Verbindunganordnung von Rohr 1 und Bauelement 5 stabilisiert aufgenommen ist.

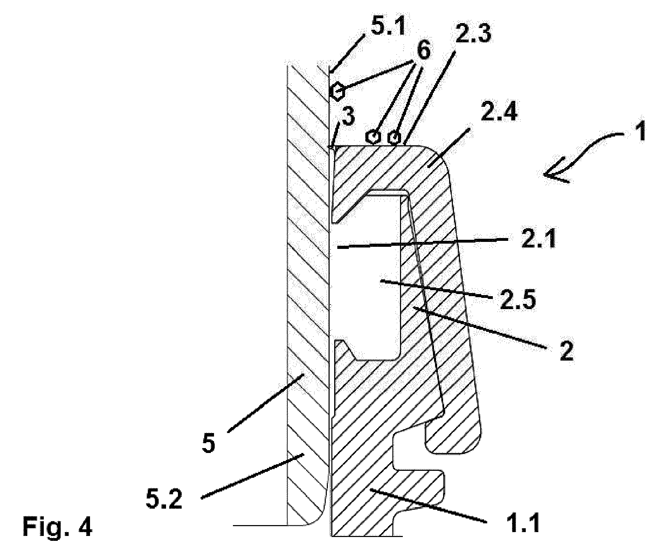

In Fig. 4 ist in einer Querschnittsansicht ein Rohr oder Rohrformteil einer zweiten Ausführungsform mit einem verbundenen Bauelement dargestellt.

Das Rohr 1 weist in diesem zweiten Ausführungsbeispiel ein zweiteiliges Verbindungsmittel 2 auf, welches ein Befestigungsmittel 2.4 umfasst, mit dem das in der Nut 2.5 angeordnete Dichtungsmittel, das hier nicht gezeigt ist, gehaltert ist. Das Befestigungsmittel 2.4 ist ringförmig ausgeführt und kann nach Einlegen des hier nicht gezeigten Dichtungsmittels in die Nut 2.5 derart auf die komplementäre Kontur des Verbindungsmittels 2 aufgedrückt werden, dass es am Verbindungsmittel 2 einrastet und so das Dichtungsmittel fixiert. Das Befestigungselement 2.4 weist eine Stirnflanke 2.3 auf, an der ein Abstreifelement 3 angeordnet ist, das von der Stirnflanke 2.3 in Richtung des Lumens 2.1 des Verbindungsmittels 2 weg steht.

In der Fig. 4 ist das Rohr 1 mit einem Bauelement 5, das vorliegend in Rohrform mit einem Ende 5.2 ausgebildet ist, verbunden.

An der Außenoberfläche 5.1 des Bauelements 5 anhaftender Schmutz 6 ist beim Einführen des Bauelements 5 in das Verbindungsmittel 2 des Rohres 1 durch das Abstreifelement 3 abgestreift worden. Die Außenoberfläche 5.1 des Bauelements 5 ist nach dem Abstreifen auf diese Weise gesäubert. Das nicht gezeigte Dichtungsmittel kann so die Dichtfunktion vollumfänglich gewährleisten. Ein Teil des abgestreiften Schmutzes 6 ist auf der Stirnflanke 2.3 des Verbindungsmittels 2 abgebildet.

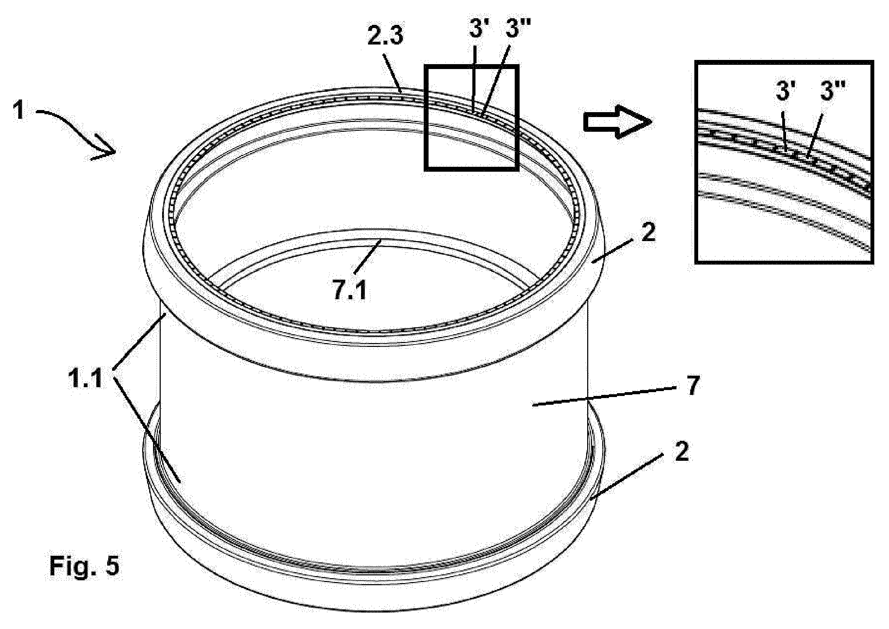

In Fig. 5 ist eine seitliche perspektivische Ansicht einer Doppelsteckmuffe dargestellt.

Das Rohr 1 ist bei dieser Ausführungsform als eine Doppelsteckmuffe 7 ausgeführt.
Die Doppelsteckmuffe 7 dient dazu, dass an beiden Enden, die sich etwa gegenüberliegen, jeweils ein - hier nicht gezeigtes - Bauelement 5 einführbar ist und so eine fluiddichte Verbindung zwischen dem einen Bauelement 5, der Doppelsteckmuffe 7 und dem anderen Bauelement 5 herstellbar ist.

Die Doppelsteckmuffe 7 weist zwei gegenüberliegende Verbindungsmittel 2 auf, die an den jeweiligen Endabschnitten 1.1 angeordnet sind. An der Innenoberfläche der Doppelsteckmuffe 7 ist ein Anschlag 7.1 ausgebildet, der dazu dient, den Einschiebeweg der mit der Doppelsteckmuffe 7 zu verbindenden Bauelemente 5, 5 zu begrenzen.

An der Stirnflanke 2.3 jedes Verbindungsmittels 2 an der Doppelsteckmuffe 7 sind eine Vielzahl von Abstreifelementen 3', 3" ausgebildet.

Die Vielzahl von Abstreifelementen 3', 3" sind bevorzugt in einer Ebene A, die etwa senkrecht zur Achse B des Endabschnitts 1.1 der Doppelsteckmuffe 7 ausgerichtet, angeordnet.

In Fig. 5 ist in einer Detailansicht, die rechts von der Doppelsteckmuffe 7 angeordnet ist, gezeigt, dass die Vielzahl von Abstreifelementen 3', 3" als nebeneinanderliegend und voneinander beabstandet ausgebildet sind, so dass jeweils zwischen zwei nebeneinander liegenden Abstreifelementen 3', 3" ein Zwischenraum ist.

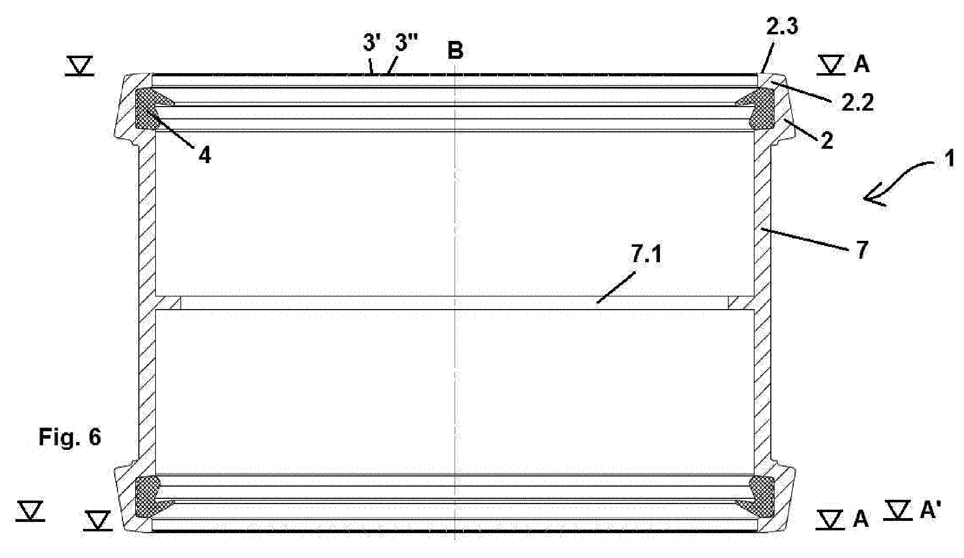

In Fig. 6 ist eine Querschnittsansicht einer Doppelsteckmuffe zeigt.

Die Doppelsteckmuffe 7 entspricht der aus Fig. 5.

Die Doppelsteckmuffe ist hinsichtlich des Anschlags 7.1 spiegelsymmetrisch zu ihren beiden Verbindungsmitteln 2 hin aufgebaut. Sie ist weiterhin rotationssymmetrisch bezüglich der Achse B ausgeführt.

Die Vielzahl von Abstreifelementen 3', 3" an der Stirnflanke 2.3 der Verbindungsmittel 2 der Doppelsteckmuffe 7 sind dabei in einer Ebene A angeordnet. Die Anordnung der Vielzahl von Abstreifelementen 3', 3" ist dabei an beiden Verbindungsmitteln 2 der Doppelsteckmuffe symmetrisch bzgl. des Anschlags 7.1 ausgebildet.

In der Fig. 6 ist weiterhin eine zweite Ebene A' gezeigt, die nicht mit der Ebene A übereinstimmt. In einer hier nicht gezeigten Fortbildung der vorliegenden Erfindung ist vorgesehen, dass in der Ebene A' ebenfalls eine Vielzahl von Abstreifelementen ausgebildet ist. Dies kann wahlweise so geschehen, dass an beiden Verbindungsmitteln 2 der Doppelsteckmuffe 7 zwei Ebenen A, A' ausgebildet sind, in der Abstreifelemente 3', 3" in einer Vielzahl ausgebildet sind, oder das nur an einem Verbindungsmittel 2 zwei solche Ebenen A, A' ausgebildet sind, wobei am anderen Verbindungsmittel 2 dann nur eine Ebene A ausgebildet ist. Die Ebenen A, A' stehen dabei senkrecht zur Achse B der Doppelsteckmuffe 7.

Von besonderem Vorteil ist dabei, wenn die Vielzahl von Abstreifelementen 3', 3", die nebeneinanderliegend und voneinander beabstandet ausgebildet sind, derart angeordnet sind, dass die Vielzahl von Abstreifelementen 3', 3" einer Ebene jeweils die zwischen den Abstreifelementen 3', 3" der anderen Ebene ausgebildeten Zwischenräume überdecken. Auf diese Weise wird ein ganz besonders wirksames Abstreifen von Schmutz 6 von der Außenoberfläche 5.1 des Bauelements 5 bewirkt.

### Bezugszeichen

- 1: Rohr oder Rohrformteil
- 1.1: Endabschnitt
- 2: Verbindungsmittel
- 2.1: Lumen
- 2.2: Abschnitt
- 2.3: Stirnflanke
- 2.4: Befestigungselement
- 2.5: Nut
- 2.6: Öffnung
- 3, 3', 3": Abstreifelement
- 4: Dichtungsmittel
- 5: Bauelement
- 5.1: Außenoberfläche
- 5.2: Ende
- 6: Schmutz
- 7: Doppelsteckmuffe
- 7.1: Anschlag
- A: Ebene
- A': Ebene
- B: Achse

## Patentansprüche

1. Rohr oder Rohrformteil (1) mit einem an einem Endabschnitt (1.1) angeordneten Verbindungsmittel (2), das ein- oder mehrteilig ausgebildet ist, und das ein Lumen (2.1) aufweist, zur fluiddichten Verbindung des Rohres oder Rohrformteils (1) mit einem Ende (5.2) eines Bauelements (5), **dadurch gekennzeichnet, dass** am Verbindungsmittel (2) wenigstens ein Abstreifelement (3) ausgebildet ist, das derartig in Richtung des Lumens (2.1) des Rohres oder Rohrformteils (1) von einem Abschnitt (2.2) des Verbindungsmittels (2) hervorsteht, dass es beim Einführen des Endes (5.2) des Bauelements (5) in das Verbindungsmittel (2) des Rohres oder Rohrformteils (1) zur Herstellung der fluiddichten Verbindung die Außenoberfläche (5.1) des Bauelements (5) zumindest abschnittweise kontaktiert.

2. Rohr oder Rohrformteil (1) nach Anspruch 1, **dadurch gekennzeichnet, dass** das Abstreifelement (3) an der Stirnflanke (2.3) des Verbindungsmittels (2) angeordnet ist.

3. Rohr oder Rohrformteil (1) nach Anspruch 1 oder 2, **dadurch gekennzeichnet, dass** ein Abstreifelement (3) oder eine Vielzahl von Abstreifelementen (3', 3") ausgebildet ist oder sind.

4. Rohr oder Rohrformteil (1) nach einem der vorangehenden Ansprüche, **dadurch gekennzeichnet, dass** das Abstreifelement (3) einstückig mit dem Verbindungsmittel (2) ausgebildet ist oder dass das Abstreifelement (3) zweistückig mit dem Verbindungsmittel (2) ausgebildet ist.

5. Rohr oder Rohrformteil (1) nach einem der vorangehenden Ansprüche, **dadurch gekennzeichnet, dass** ein Abstreifelement (3) oder eine Vielzahl von Abstreifelementen (3', 3") ausgebildet ist oder sind, wobei das Abstreifelement (3) oder die Vielzahl von Abstreifelementen (3', 3") bevorzugt in einer Ebene A, die etwa senkrecht zur Achse B des Endabschnitts (1.1) des Rohres oder Rohrformteils (1) ausgerichtet ist, angeordnet ist oder sind.

6. Rohr oder Rohrformteil (1) nach einem der vorangehenden Ansprüche, **dadurch gekennzeichnet, dass** wenigstens zwei Reihen von Abstreifelementen (3) ausgebildet sind, die jeweils bevorzugt in zwei Ebenen A, A', die etwa senkrecht zur Achse B des Endabschnitts (1.1) des Rohres oder Rohrformteils (1) ausgerichtet sind, angeordnet sind.

7. Rohr oder Rohrformteil (1) nach einem der vorangehenden Ansprüche, **dadurch gekennzeichnet, dass** das Abstreifelement (3) aus dem Polymermaterial des Verbindungsmittel (2) besteht bzw. ein solches enthält oder dass das Abstreifelement (3) aus einem gegenüber dem Polymermaterial des Verbindungsmittels (2) unterschiedlichen Polymermaterial besteht bzw. ein solches enthält.

8. Rohr oder Rohrformteil (1) mit wenigstens zwei Verbindungsmitteln (2) nach einem der vorangehenden Ansprüche.

9. Rohr oder Rohrformteil (1) nach Anspruch 8, das als Doppelsteckmuffe (7) oder Überschiebmuffe ausgebildet ist.

10. Rohrsystem mit einem Rohr oder Rohrformteil (1) nach einem der Ansprüche 1 bis 9.
